# EUROPEAN PATENT APPLICATION

(11) **EP 4 553 052 A1**
(43) Date of publication of application: **14.05.2025**
(21) Application number: 23208746.0
(22) Date of filing: 09.11.2023
(51) Int. Cl.: C04B 28/02, C04B 28/04, C04B 28/14

(54) **CLAY INSENSITIVE CONSTRUCTION MATERIAL COMPOSITION**

(71) Applicant: BASF SE, 67056 Ludwigshafen am Rhein (DE)
(72) Inventor: HAMBACH, Manuel, 83308 Trostberg (DE); SCHMIDTKE, Christian, 83308 Trostberg (DE); WOHLMUTH, Catharina, 67056 Ludwigshafen (DE); TUERK, Holger, 67056 Ludwigshafen (DE); SCHOEBEL, Alexander, 83308 Trostberg (DE); MAITRO-VOGEL, Sophie, 67056 Ludwigshafen (DE)
(74) Representative: BASF IP Association

(57) **Abstract**

The present invention is directed to a construction material composition comprising an inorganic binder, clay, a polymeric dispersant and an alkoxylated polyalkyleneimine. Further, the present invention is directed to the use of at least one alkoxylated polyalkyleneimine in a construction material composition for modifying robustness against clay deviations.

## Description

The present invention is directed to a construction material composition comprising an inorganic binder, clay, a polymeric dispersant and an alkoxylated polyalkyleneimine. Further, the present invention is directed to the use of at least one alkoxylated polyalkyleneimine in a construction material composition for modifying robustness against clay deviations.

Inorganic binders, such as cement or gypsum, are from natural sources and frequently comprise impurities such as clay in various amounts. Clays have a high surface and/or a high porosity. These clay impurities may result in the reduction of the flowability of the construction material composition comprising the inorganic binder, since the usually applied plasticizers tends to have high adsorptive affinity towards clay. The plasticizer may not be sufficiently available for the construction material composition due to the high affinity of the clay to said plasticizer. Hence, this may lead to negative effects in view of workability of said construction martial composition. Further, the hardened construction material composition may be influenced negatively due to an insufficient workability.

US 6 352 952 discloses aqueous cement containing compositions comprising ethylene oxide/propylene oxide-containing comb polymers as plasticizer in the presence of clay mineral of the smectite type. Further it is described that the clay mineral in conjunction with swelling, entraps the fluidizer. This ultimately leads to poor workability of the cement binder based mixtures. To prevent the absorption of the fluidizer it is suggested to utilize inorganic cations, organic cations, polar organic groups or clay specific dispersants. Phosphates, poly(meth)acrylates and gluconates are particularly mentioned. These compounds though cannot be utilized in gypsum compositions because of the strong setting-time retardation of the inorganic binder mixtures.

EP1984309 and EP2649106 describe that the negative effect of clay may be reduced via cationic clay blocking agents (also known as clay blocker). The cationic clay blocking agents have chloride as counter ions, which are undesired in several construction material compositions. WO2021/170494 discloses a non-ionic copolymer and the use thereof as clay blocking agent. In general clay blocking agents have a higher affinity to clay than to the superplasticizer. Hence, the amount of plasticizer that is available for dispersion of the inorganic binder is less reduced.

Against this background, it was an object of the present invention to provide a construction material composition, which on the one hand ensures good processability (workability) and to provide high robustness with respect to clay contamination

It was a further object of the present invention to provide an additive for use in construction material compositions comprising an inorganic binder and conventional plasticizers, for improving their robustness against clay deviations.

It was a further object of the present invention to provide an additive which does not show significant liquefying effect in inorganic binder slurries to ensure the robustness concept needed for rheology adjustment in practical application.

It has surprisingly been found that these objects can be achieved by a construction material composition comprising,
A) at least one inorganic binder,
B) at least one clay,

at least one polymeric dispersant, which comprises at least one structural unit comprising anionic groups and/or at least one structural unit comprising anionogenic groups and further at least one structural unit having polyether side chains,
D) at least one alkoxylated polyalkyleneimine, wherein the alkoxylated polyalkyleneimine has a weight average molecular weight (Mw) of 500 to 200.000 g/mol measured by Gel Permeation Chromatography.

Weight average molecular weight (Mw) values of the alkoxylated polyalkyleneimine are determined Gel Permeation Chromatography by the method as follows: OECD TG 118 (1996), which means in detail OECD (1996), Test No. 118: Determination of the Number-Average Molecular Weight and the Molecular Weight Distribution of Polymers using Gel Permeation Chromatography, OECD Guidelines for the Testing of Chemicals, Section 1, OECD Publishing, Paris, also available on the internet, for example, under https://doi.org/10.1787/9789264069848-en. The measurements were carried on a combination of two columns (styrene-divinylbenzene and polyester copolymer, both 25 cm in length and 4,6 mm in diameter), using 0.05 wt.-% potassium trifluoroacetate in hexafluoroisopropanol as eluent. The molecular weights are obtained by using an RI detector and PEO standards (Polymer Laboratories/Agilent, USA) for calibration.

According to the present invention, the at least one inorganic binder A) may be selected from calcium sulfate based binders, hydraulic binders, latent hydraulic binders and mixtures thereof.

In one embodiment, the present invention relates to a construction material composition comprising at least one inorganic binder A) selected from cement, calcium sulfate hemihydrate, anhydrite, slag, preferably ground granulated blast furnace slag, fly ash, silica dust, metakaolin, natural pozzolans and/or calcined oil shale or mixtures thereof.

In one further embodiment of the present invention, the construction material comprises at least one additional inorganic binder selected from the group consisting of hydraulic binder, latent hydraulic binder, inorganic binder based on calcium sulfate, and mixtures thereof. In this connection it is to be understood that the construction material comprises at least two inorganic binders.

In a preferred embodiment, the at least one inorganic binder is a hydraulic binder, which is preferably selected from Portland cement, calcium aluminate cement, sulfoaluminate cement, and mixtures thereof, and is particularly preferably Portland cement. In certain preferred embodiment, the inorganic binder comprises aluminate cements in an amount of less than 10 % by weight, preferably less than 5 % by weight. In certain particularly preferred embodiments, the construction material composition is free of aluminate cements.

The mineralogical phases are indicated by their usual name followed by their cement notation. The primary compounds are represented in the cement notation by the oxide varieties: C for CaO, S for SiO₂, A for Al₂O₃, $ for SO₃, H for H₂O; this notation is used throughout.

The term "Portland cement" denotes any cement compound containing Portland clinker, especially CEM I, II, III, IV and V within the meaning of standard EN 197-1, paragraph 5.2. A preferred cement is ordinary Portland cement (OPC) according to DIN EN 197-1 which may either contain calcium sulfate (< 7% by weight) or is essentially free of calcium sulfate (<1 % by weight).

Calcium aluminate cement (also referred to as high aluminate cement) means a cement containing calcium aluminate phases. The term "aluminate phase" denotes any mineralogical phase resulting from the combination of aluminate (of chemical formula Al₂O₃, or "A" in cement notation), with other mineral species. The amount of alumina (in form of Al₂O₃) is ≥ 30 % by weight of the total mass of the aluminate-containing cement as determined by means of X-ray fluorescence (XRF). More precisely, said mineralogical phase of aluminate type comprises tricalcium aluminate (C₃A), monocalcium aluminate (CA), mayenite (C₁₂A₇), tetracalcium aluminoferrite (C₄AF), or a combination of several of these phases.

Sulfoaluminate cement has a content of yeelimite (of chemical formula 4CaO.3Al₂O₃.SO₃ or C₄A₃$ in cement notation) of greater than 15% by weight.

In one preferred embodiment, the inorganic binder is a hydraulic binder, which is selected from Portland cement, calcium aluminate cement, sulfoaluminate cement, and mixtures thereof. In another preferred embodiment, the inorganic binder comprises a mixture of Portland cement and aluminate cement, or a mixture of Portland cement and sulfoaluminate cement or a mixture of Portland cement, aluminate cement and sulfoaluminate cement.

In an embodiment, where the construction material composition contains an aluminate-containing cement, the compositions may additionally contain at least one sulfate source, preferably calcium sulfate source. The calcium sulfate source may be selected from calcium sulfate dihydrate, anhydrite, α- and β-hemihydrate, i.e. α-bassanite and β-bassanite, or mixtures thereof. Preferably the calcium sulfate is α-bassanite and/or β-bassanite. In general, calcium sulfate is comprised in an amount of about 1 to about 20% by weight, based on the weight of the aluminate-containing cement. In a further embodiment, the construction material composition additionally contains at least one alkali metal sulfate like potassium sulfate or sodium sulfate, or aluminum sulfate.

Preferable are construction material compositions, which comprise a hydraulic binder and in which the weight percentage of sulfate with respect to the weight of clinker is from 4 to 14% by weight, preferably from 8 to 14% by weight most preferably from 9 to 13% by weight. The mass of sulfate is to be understood as the mass of the sulfate ion without the counterion. Preferably the sulfate is present in the form of calcium sulfate, more preferably in the form of α-bassanite and/or β-bassanite.

Addition of sulfate to hydraulic binders (cements), which are poor in the contents of sulfate helps to encourage the formation of ettringite and leads to a better early strength development.

The construction material compositions may also contain latent hydraulic binders and/or pozzolanic binders. For the purposes of the present invention, a "latent hydraulic binder" is preferably an inorganic binder in which the molar ratio (CaO + MgO) : SiOz is from 0.8 to 2.5 and particularly from 1.0 to 2.0. In the context of the present invention, calcium sulfate based binders is also referred to as "gypsum". In general terms, the above-mentioned latent hydraulic binders can be selected from industrial and/or synthetic slag, in particular from blast furnace slag, electrothermal phosphorous slag, steel slag and mixtures thereof. The "pozzolanic binders" can generally be selected from amorphous silica, preferably precipitated silica, fumed silica and microsilica, ground glass, metakaolin, aluminosilicates, fly ash, preferably brown-coal fly ash and hard-coal fly ash, natural pozzolans such as tuff, trass and volcanic ash, natural and synthetic zeolites and mixtures thereof.

The slag can be either industrial slag, i.e. waste products from industrial processes, or else synthetic slag. The latter can be advantageous because industrial slag is not always available in consistent quantity and quality.

Blast furnace slag (BFS) is a waste product of the glass furnace process. Other materials are granulated blast furnace slag (GBFS) and ground granulated blast furnace slag (GGBFS), which is granulated blast furnace slag that has been finely pulverized. Ground granulated blast furnace slag varies in terms of grinding fineness and grain size distribution, which depend on origin and treatment method, and grinding fineness influences reactivity here. The Blaine value is used as parameter for grinding fineness, and typically has an order of magnitude of from 200 to 1000 m² kg⁻¹, preferably from 300 to 600 m² kg⁻¹. Finer milling gives higher reactivity.

For the purposes of the present invention, the expression "blast furnace slag" is however intended to comprise materials resulting from all of the levels of treatment, milling, and quality mentioned (i.e. BFS, GBFS and GGBFS). Blast furnace slag generally comprises from 30 to 45% by weight of CaO, about 4 to 17% by weight of MgO, about 30 to 45% by weight of SiO₂ and about 5 to 15% by weight of Al₂O₃, typically about 40% by weight of CaO, about 10% by weight of MgO, about 35% by weight of SiO₂ and about 12% by weight of Al₂O₃.

Electrothermal phosphorous slag is a waste product of electrothermal phosphorous production. It is less reactive than blast furnace slag and comprises about 45 to 50% by weight of CaO, about 0.5 to 3% by weight of MgO, about 38 to 43% by weight of SiO₂, about 2 to 5% by weight of Al₂O₃ and about 0.2 to 3% by weight of Fe₂O₃, and also fluoride and phosphate. Steel slag is a waste product of various steel production processes with greatly varying composition.

A particularly suitable latent hydraulic binder is blast furnace slag.

The latent hydraulic binder is, in general, comprised in an amount in the range from about 1 to about 30% by weight, based on the weight of the aluminate-containing cement.

In case the construction material composition contains low amount of hydraulic binder (e.g. ≤ 10% by weight) an alkaline activator can be further added to promote strength development. Alkaline activators are preferably used in the inorganic binder system, such alkaline activators are for example aqueous solutions of alkali metal fluorides, alkali metal hydroxides, alkali metal aluminates or alkali metal silicates, such as soluble waterglass, and mixtures thereof.

In one preferred embodiment, the inorganic binder is a calcium sulfate based binder, which is selected from calcium sulfate dihydrate, calcium sulfate hemihydrate, anhydrite, and mixtures thereof. In another preferred embodiment, the inorganic binder is a calcium sulfate based binder in its anhydrous form.

In general, gypsum rock is mined or quarried and transported to the manufacturing facility. The manufacturer receives quarried gypsum, and crushes the large pieces before any further processing takes place. Crushed rock is then ground into a fine powder and heated to about 120-160 degrees C, driving off three-fourths of the chemically bound water in a process called "calcining", providing "calcined gypsum". Further heating of gypsum, slightly beyond 200°C produces anhydrite gypsum (CaSO₄) that when mixed with water, sets very slowly. The calcined gypsum (hemihydrate or anhydrite) CaSO₄•½H₂O or CaSO₄ are then used as the base for gypsum plaster, plaster of paris, gypsum board and other gypsum products. Products of the various calcinating procedures are alpha and beta-hemihydrate. Beta calcium sulfate hemihydrate results from rapid heating in open units with rapid evaporation of water forming cavities in the resulting anhydrous product. Alpha hemihydrate is obtained by dehydrating gypsum in closed autoclaves. The crystals formed in this case are dense and therefore the resulting inorganic binder requires less water for rehydrating compared to beta-hemihydrate. The typical natural gypsum sources that are commercially available often contain clay mineral and other impurities of up to 20% or more that results in reduced calcium sulfate levels.

Amorphous silica is preferably an X ray-amorphous silica, i.e. a silica for which the powder diffraction method reveals no crystallinity. The content of SiO₂ in the amorphous silica of the invention is advantageously at least 80% by weight, preferably at least 90% by weight. Precipitated silica is obtained on an industrial scale by way of precipitating processes starting from water glass. Precipitated silica from some production processes is also called silica gel.

Fumed silica is produced via reaction of chlorosilanes, for example silicon tetrachloride, in a hydrogen/oxygen flame. Fumed silica is an amorphous SiO₂ powder of particle diameter from 5 to 50 nm with specific surface area of from 50 to 600 m₂ g⁻¹.

Microsilica is a by-product of silicon production or ferrosilicon production, and likewise consists mostly of amorphous SiO₂ powder. The particles have diameters of the order of magnitude of 0.1 µm. Specific surface area is of the order of magnitude of from 10 to 30 m² g⁻¹.

Fly ash is produced inter alia during the combustion of coal in power stations. Class C fly ash (brown-coal fly ash) comprises according to WO 08/012438 about 10% by weight of CaO, whereas class F fly ash (hard-coal fly ash) comprises less than 8% by weight, preferably less than 4% by weight, and typically about 2% by weight of CaO.

Metakaolin is produced when kaolin is dehydrated. Whereas at from 100 to 200°C kaolin releases physically bound water, at from 500 to 800°C a dehydroxylation takes place, with collapse of the lattice structure and formation of metakaolin (Al₂Si₂O₇). Accordingly, pure metakaolin comprises about 54% by weight of SiO₂ and about 46% by weight of Al₂O₃.

For the purposes of the present invention, aluminosilicates are the abovementioned reactive compounds based on SiO₂ in conjunction with Al₂O₃ which harden in an aqueous alkali environment. It is of course not essential here that silicon and aluminium are present in oxidic form, as is the case by way of example in Al₂Si₂O₇. However, for the purposes of quantitative chemical analysis of aluminosilicates it is usual to state the proportions of silicon and aluminium in oxidic form (i.e. as "SiO₂" and "Al₂O₃").

The construction material composition according to the invention comprises preferably from 1 to 99.97% by weight, preferably from 10 to 99 % by weight and in particular from 20 to 98 % by weight of at least one inorganic binder.

According to the present invention, the construction material composition comprises at least one clay B). Clay is the common name for a number of fine-grained, earthy materials that become plastic when wet and are mostly composed of phyllosilicate minerals containing variable amounts of water trapped in the mineral structure. There are many types of known clay minerals. Some of the more common types are: kaolinite, illite, chlorite, vermiculite and smectite, also known as montmorillonite, the latter two have pronounced ability to adsorb water.

Chemically, clays are hydrous aluminum silicates, usually containing alkaline metals, alkaline earth metals and/or iron. The clay mineral consists of sheets of interconnected silicates combined with a second sheet-like grouping of metallic atoms, oxygen, and hydroxyl, forming a two-layer mineral as in kaolinite. Sometimes the latter sheet like structure is found sandwiched between two silica sheets, forming a three-layer mineral such as in vermiculite. Structurally, the clay minerals are composed of planes of cations, arranged in sheets, which may be tetrahedral or octahedral coordinated (with oxygen), which in turn are arranged into layers often described as 2:1 if they involve units composed of two tetrahedral and one octahedral sheet or 1:1 if they involve units of alternating tetrahedral and octahedral sheets. Additionally, some 2:1 clay minerals have interlayer sites between successive 2:1 units which may be occupied by interlayer cations that are often hydrated. Clay minerals are divided by layer type, and within layer type, by groups based on charge x per formula unit (Guggenheim S. et al., Clays and Clay Minerals, 54 (6), 761-772, 2006). The charge per formula unit, x, is the net negative charge per layer, expressed as a positive number. Further subdivisions by subgroups are based on dioctahedral or trioctahedral character, and finally by species based on chemical composition e.g.
x ≈ 0: pyrophyllite-group
x ≈ 0.2 - 0.6: smectite-group e.g. montmorillonite, nontronite, saponite or hectorite
x ≈ 0.6 - 0.9: vermiculite-group
x ≈ 1.8 - 2: brittle mica-group e.g. clintonite, anandite, kinoshitalite.

In one particularly preferred embodiment of the present invention, the at least one clay B) is selected from the group of kaolinite, illite, chlorite, vermiculite and smectite. In one further preferred embodiment of the present invention, the at least one clay B) comprises or preferably consist of a calcined clay.

The construction material composition according to the invention comprises preferably from 0.01 to 50% by weight, preferably from 0.01 to 10 % by weight and in particular from 0.05 to 5 % by weight of at least one clay.

The construction material composition can be for example concrete, mortar, cement paste, grouts, or a gypsum containing slurry. The term "cement paste" denotes the inorganic binder composition admixed with water.

The term "mortar" or "grout" denotes a cement paste to which are added fine granulates, i.e. granulates whose diameter is between 150 µm and 5 mm (for example sand), and optionally very fine granulates. A grout is a mixture of sufficiently low viscosity for filling in voids or gaps. Mortar viscosity is high enough to support not only the mortar's own weight but also that of masonry placed above it. The term "concrete" denotes a mortar to which are added coarse granulates, i.e. granulates with a diameter of greater than 5 mm.

The construction material composition can further comprise aggregates. Aggregates according to the present invention can be for example silica, quartz, sand, crushed marble, glass spheres, granite, limestone, sandstone, calcite, marble, serpentine, travertine, dolomite, feldspar, gneiss, alluvial sands, any other durable aggregate, and mixtures thereof. The aggregates are often also called fillers and in particular do not work as an inorganic binder.

According to the present invention, the construction material composition comprises at least one polymeric dispersant C), which comprises at least one structural unit comprising anionic groups and/or at least one structural unit comprising anionogenic groups and further at least one structural unit having polyether side chains.

In one preferred embodiment, the polyether side chains of the at least one polymeric dispersant are polyether groups of the structural unit (I),

*-U-(C(O))ₖ-X-(AlkO)ₙ-W (I)

where
- *: indicates the bonding site to the polymer,
- U: is a chemical bond or an alkylene group having 1 to 8 carbon atoms,
- X: is oxygen, sulfur or a group NR¹,
- k: is 0 or 1,
- n: is an integer whose average value based on the polymer is in the range from 3 to 300,
- Alk: is C₂-C₄ alkylene, it being possible for Alk to be identical or different within the group (Alk-O)ₙ,
- W: is a hydrogen, a C₁-C₆ alkyl or an aryl radical or is the group Y-F, where
- Y: is a linear or branched alkylene group having 2 to 8 carbon atoms and may carry a phenyl ring,
- F: is a 5- to 10-membered nitrogen heterocycle which is bonded via nitrogen and which as ring members, besides the nitrogen atom and besides carbon atoms, may have 1, 2 or 3 additional heteroatoms, selected from oxygen, nitrogen, and sulfur, it being possible for the nitrogen ring members to have a group R², and for 1 or 2 carbon ring members to be present in the form of a carbonyl group,
- R¹: is hydrogen, C₁-C₄ alkyl or benzyl, and
- R²: is hydrogen, C₁-C₄ alkyl or benzyl.

In one particularly preferred embodiment, the polymeric dispersant represents a polycondensation product comprising
(II) a structural unit comprising an aromatic or heteroaromatic and the polyether group, and
(III) a phosphated structural unit comprising an aromatic or heteroaromatic.

The structural units (II) and (III) are represented preferably by the following general formulae

(II) A-U-(C(O))ₖ-X-(AlkO)ₙ-W

where
A is identical or different and is represented by a substituted or unsubstituted, aromatic or heteroaromatic compound having 5 to 10 carbon atoms in the aromatic system, the other radicals possessing the definition stated for structural unit (I); 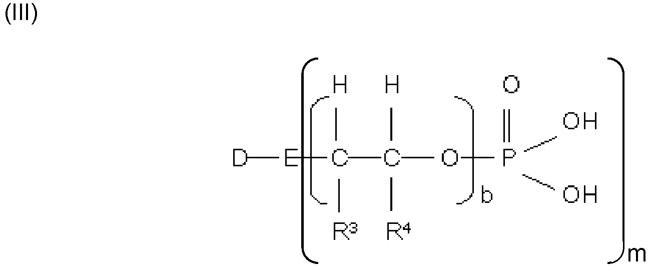 where
D is identical or different and is represented by a substituted or unsubstituted, aromatic or heteroaromatic compound having 5 to 10 carbon atoms in the aromatic system.

Furthermore, E is identical or different and is represented by N, NH or O, m = 2 if E = N and m = 1 if E = NH or O.

R³ and R⁴ independently of one another are identical or different and are represented by a branched or unbranched C₁ to C₁₀ alkyl radical, C₅ to C₈ cycloalkyl radical, aryl radical, heteroaryl radical or H, preferably by H, methyl, ethyl or phenyl, more preferably by H or methyl, and especially preferably by H. Furthermore, b is identical or different and is represented by an integer from 0 to 300. If b = 0, then E = O. More preferably D = phenyl, E = O, R³ and R⁴ = H, and b = 1.

The polycondensation product preferably comprises a further structural unit (IV), which is represented by the following formula 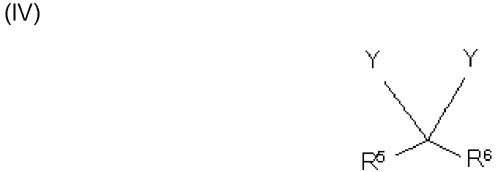 where
Y independently of one another is identical or different and is represented by (II), (III) or further constituents of the polycondensation product.

R⁵ and R⁶ are preferably identical or different and are represented by H, CH₃, COOH, or a substituted or unsubstituted, aromatic or heteroaromatic compound having 5 to 10 carbon atoms. In structural unit (IV) here, R⁵ and R⁶ independently of one another are preferably represented by H, COOH and/or methyl.

In one particularly preferred embodiment, R⁵ and R⁶ are represented by H.

The molar ratio of the structural units (II), (III), and (IV) in the phosphated polycondensation product of the invention may be varied within wide ranges. It has proven useful for the molar ratio of the structural units [(II) + (III)] : (IV) to be 1 : 0.8 to 3, preferably 1 : 0.9 to 2, and more preferably 1: 0.95 to 1.2.

The molar ratio of the structural units (II) : (III) is normally 1 : 10 to 10 : 1, preferably 1 : 7 to 5 : 1, and more preferably 1 : 5 to 3 : 1.

The groups A and D in the structural units (II) and (III) of the polycondensation product are usually represented by phenyl, 2-hydroxyphenyl, 3-hydroxyphenyl, 4-hydroxyphenyl, 2-methoxyphenyl, 3-methoxyphenyl, 4-methoxyphenyl, naphthyl, 2-hydroxynaphthyl, 4-hydroxynaphthyl, 2-methoxynaphthyl and/or 4-methoxynaphthyl, preferably phenyl, and A and D may be selected independently of one another and may also each consist of a mixture of the compounds stated. Groups X and E independently of one another are preferably represented by O.

Preferably, n in structural unit (I) is represented by an integer from 5 to 280, more particularly 10 to 160, and very preferably 12 to 120, and b in structural unit (III) is represented by an integer from 0 to 10, preferably 1 to 7, and more preferably 1 to 5. The respective radicals whose length is defined by n and b, respectively, may consist here of unitary structural groups; however, it may also be useful for them to comprise a mixture of different structural groups. Furthermore, independently of one another, the radicals of the structural units (II) and (III) may each possess the same chain length, with n and b each being represented by one number. In general, however, it will be useful for each of them to comprise mixtures having different chain lengths, so that the radicals of the structural units in the polycondensation product have different numerical values for n and, independently, for b.

In one particular embodiment, the present invention further provides for the salt of the phosphated polycondensation product to be a sodium, potassium, ammonium and/or calcium salt and preferably a sodium and/or potassium salt.

The phosphated polycondensation product of the invention often has a weight-average molecular weight of 5000 g/mol to 150 000 g/mol, preferably 10 000 to 100 000 g/mol, and more preferably 20 000 to 75 000 g/mol.

With regard to the phosphated polycondensation products for preferred use in accordance with the present invention, and to their preparation, reference is further made to patent applications WO 2006/042709 and WO 2010/040612, the content of which is hereby incorporated into the specification.

In a further preferred embodiment, the polymeric dispersant is at least one copolymer which is obtainable by polymerizing a mixture of monomers comprising
(V) at least one ethylenically unsaturated monomer which comprises at least one radical from the series consisting of carboxylic acid, carboxylic salt, carboxylic ester, carboxylic amide, carboxylic anhydride, and carboxylic imide
   and
(VI) at least one ethylenically unsaturated monomer comprising the polyether group, the polyether group being represented preferably by the structural unit (I).

The copolymers in accordance with the present invention comprise at least two monomer units. It may, however, also be advantageous to use copolymers having three or more monomer units.

In one preferred embodiment, the ethylenically unsaturated monomer (V) is represented by at least one of the following general formulae from the group consisting of (Va), (Vb), and (Vc):

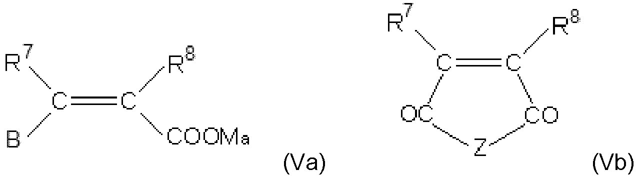

In the monocarboxylic or dicarboxylic acid derivative (Va) and in the monomer (Vb) present in cyclic form, where Z = O (acid anhydride) or NR¹⁶ (acyl imide), R⁷ and R⁸ independently of one another are hydrogen or an aliphatic hydrocarbon radical having 1 to 20 carbon atoms, preferably a methyl group. B is H, -COOMₐ, -CO-O(C_{q}H_{2q}O)ᵣ-R⁹, -CO-NH-(C_{q}H_{2q}O)ᵣ-R⁹.

M is hydrogen, a mono-, di- or trivalent metal cation, preferably sodium, potassium, calcium or magnesium ion, additionally ammonium or an organic amine radical, and a = 1/3, 1/2 or 1, depending on whether M is a mono-, di- or trivalent cation. Organic amine radicals used are preferably substituted ammonium groups deriving from primary, secondary or tertiary C₁₋₂₀ alkylamines, C₁₋₂₀ alkanolamines, C₅₋₈ cycloalkylamines, and C₆₋₁₄ arylamines. Examples of the corresponding amines are methylamine, dimethylamine, trimethylamine, ethanolamine, diethanolamine, triethanolamine, methyldiethanolamine, cyclohexylamine, dicyclohexylamine, phenylamine, diphenylamine in the protonated (ammonium) form.

R⁹ is hydrogen, an aliphatic hydrocarbon radical having 1 to 20 carbon atoms, a cycloaliphatic hydrocarbon radical having 5 to 8 carbon atoms, an aryl radical having 6 to 14 carbon atoms, which may optionally also be substituted, q = 2, 3 or 4, and r = 0 to 200, preferably 1 to 150. The aliphatic hydrocarbons here may be linear or branched and also saturated or unsaturated. Preferred cycloalkyl radicals are cyclopentyl or cyclohexyl radicals, and preferred aryl radicals are phenyl radicals or naphthyl radicals, which in particular may also be substituted by hydroxyl, carboxyl or sulfonic acid groups.

Furthermore, Z is O or NR¹⁶, where R¹⁶ independently at each occurrence is identical or different and is represented by a branched or unbranched C₁ to C₁₀ alkyl radical, C₅ to C₈ cycloalkyl radical, aryl radical, heteroaryl radical or H.

The following formula represents the monomer (Vc):

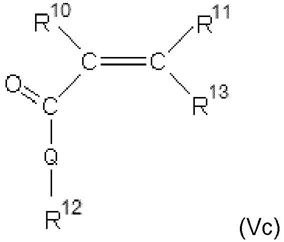

In this formula, R¹⁰ and R¹¹ independently of one another are hydrogen or an aliphatic hydrocarbon radical having 1 to 20 carbon atoms, a cycloaliphatic hydrocarbon radical having 5 to 8 carbon atoms, or an optionally substituted aryl radical having 6 to 14 carbon atoms.

Furthermore, R¹² is identical or different and is represented by (CₙH₂ₙ)-SO₃H where n = 0, 1, 2, 3 or 4, (CₙH₂ₙ)-OH where n = 0, 1, 2, 3 or 4; (CₙH₂ₙ)-PO₃H₂ where n = 0, 1, 2, 3 or 4, (CₙH₂ₙ)-OPO₃H₂ where n = 0, 1, 2, 3 or 4, (C₆H₄)-SO₃H, (C₆H₄)-PO₃H₂, (C₆H₄)-OPO₃H₂ und (CₙH₂ₙ)-NR¹⁴b where n = 0, 1, 2, 3 or 4 and b is represented by 2 or 3.

R¹³ is H, -COOMₐ, -CO-O(C_{q}H_{2q}O)ᵣ-R⁹, -CO-NH-(C_{q}H_{2q}O)ᵣ-R⁹, where Mₐ, R⁹, q, and r possess the definitions stated above.

R¹⁴ is hydrogen, an aliphatic hydrocarbon radical having 1 to 10 carbon atoms, a cycloaliphatic hydrocarbon radical having 5 to 8 carbon atoms, or an optionally substituted aryl radical having 6 to 14 carbon atoms.

Furthermore, Q is identical or different and is represented by NH, NR¹⁵ or O, and R¹⁵ is an aliphatic hydrocarbon radical having 1 to 10 carbon atoms, a cycloaliphatic hydrocarbon radical having 5 to 8 carbon atoms, or an optionally substituted aryl radical having 6 to 14 carbon atoms.

In one particularly preferred embodiment, the ethylenically unsaturated monomer (VI) is represented by the following general formulae 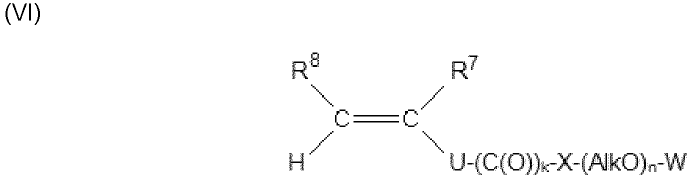 in which all radicals have the definitions stated above.

In particular, the copolymer has an average molar weight (Mw) of between 5000 and 150 000 g/mol, more preferably 10 000 to 80 000 g/mol, and very preferably 15 000 to 60 000 g/mol, as determined by gel permeation chromatography.

The polymers are analyzed by size exclusion chromatography for average molar mass and conversion (column combinations: Shodex OH-Pak SB 804 HQ and OH-Pak SB 802.5 HQ from Showa Denko, Japan; eluent: 80 vol% aqueous solution of HCO₂NH₄ (0.05 mol/l) and 20 vol% MeOH; injection volume 100 µl; flow rate 0.5 ml/min).

The copolymer of the invention preferably meets the requirements of the industry standard EN 934-2 (February 2002).

Preferably the polymeric dispersant has a solubility in water at 20°C under atmospheric pressure of at least 1 gram per liter, more particularly at least 10 grams per liter, and very preferably at least 100 grams per liter.

The construction material composition according to the invention comprises preferably from 0.01 to 10% by weight, preferably from 0.05 to 5 % by weight and in particular from 0.1 to 1 % by weight of the polymeric dispersant.

According to the present invention, the construction material composition comprises at least one alkoxylated polyalkyleneimine, wherein the alkoxylated polyalkyleneimine has a weight average molecular weight (Mw) of 500 to 200.000 g/mol measured by measured by Gel Permeation Chromatography.

Alkoxylated polyalkyleneimines are generally known, for example from WO 2006/086492, WO 2007/135645 and WO 1999/67352. Usually, they have the general formula (VII)

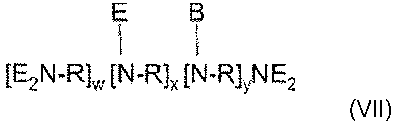

Here, alkylene oxide units undergo an additional reaction with the nitrogen atoms of the polyalkyleneimine backbone, where the backbone, before subsequently being modified, comprise primary, secondary and tertiary amine nitrogen atoms linked via linking units R. The backbone consists essentially of three types of units which can be distributed randomly along the chain. In the case of the units which account for the polyalkyleneimine backbones, they take the form of
a) primary units, corresponding to the formula [H₂N-R]- and -NH₂, which terminate the backbone and any branching,
b) secondary amine units corresponding to the formula -[NH-R]-, whose hydrogen atom is, after the modification, replaced by alkylene oxide units (for example 1 to 10 propyleneoxy units, butyleneoxy units and their mixtures, followed by 10 to 40 ethyleneoxy units), and
c) tertiary amine units, corresponding to the formula 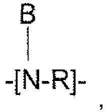 which constitutes the branching sites of the main and of the secondary backbone chains, with B representing a continuation of the chain structure by branching. The tertiary units do not have a replaceable hydrogen atom and are therefore not modified by substitution with an alkyleneoxy unit.

During the formation of the polyamine backbone, cyclization may occur, which is why a proportion of cyclic polyamine may be present in the basic polyalkyleneimine main-chain mixture. Each primary and secondary amine unit of the cyclic alkyleneimines is modified in the same manner as linear and branched polyalkyleneimines, which is by addition of the alkyleneoxy units.

R is linear C₂-C₆-alkylene, branched C₃-C₆-alkylene and their mixtures. The preferred branched alkylene is 1,2-propylene. The preferred R is ethylene. The preferred polyalkyleneimines have a backbone which contain the same unit R, for example all units are ethylene. The backbone very specially preferably comprises exclusively ethylene units as R.

In one particularly preferred embodiment, the alkoxylated polyalkyleneimine preferably comprises a polyethyleneimine backbone having a weight average molecular weight between 100 and 10000 g/mol measured by Gel Permeation Chromatography. The molecular weight of the polyalkyleneimine backbone is preferably between 200 and 80000 g/mol or preferably between 300 and 5000 g/mol, particularly preferably between 400 and 4000 g/mol, very specially preferably between 500 and 3000 g/mol, especially preferably between 600 and 2000 g/mol.

Weight average molecular weight (Mw) values of the polyethyleneimine backbone are determined by measured by Gel Permeation Chromatography by the method as follows: OECD TG 118 (1996), which means in detail OECD (1996), Test No. 118: Determination of the Number-Average Molecular Weight and the Molecular Weight Distribution of Polymers using Gel Permeation Chromatography, OECD Guidelines for the Testing of Chemicals, Section 1, OECD Publishing, Paris, also available on the internet, for example, under https://doi.org/10.1787/9789264069848-en. The measurements is carried on a combination of two columns (styrene-divinylbenzene and polyester copolymer, both 25 cm in length and 4,6 mm in diameter), using 0.05 wt% potassium trifluoroacetate in hexafluoroisopropanol as eluent. The molecular weights are obtained by using an RI detector and PEO standards (Polymer Laboratories/Agilent, USA) for calibration.

The polyalkyleneimines have been modified by substituting -[NH-R]- and -NH₂ units by an alkyleneoxy unit E. In one particularly preferred embodiment, the alkylenoxid segments of the alkoxylated polyalkyleneimine are selected from of at least one element of the group of C₂-C₆-alkylene oxide. Examples of alkylene oxide units are C₂-C₆-alkylene oxide units such as ethylene oxide, propylene oxide or butylene oxide. In one embodiment it is preferred that at least one propyleneoxy or butyleneoxy unit will undergo an addition reaction with the nitrogen units of the backbone before substitution with a different alkyleneoxy unit takes place.

In one particularly preferred embodiment, the alkoxylated polyalkyleneimine comprises an average of 5 to 100 mol of alkoxy units per alkoxylation chain.

In a further embodiment the alkoxylated polyalkyleneimine is preferably an ethoxylated and/or propoxylated polyalkyleneimine (such as polyethyleneimine), where it is especially preferred that the polyalkyleneimine has first been modified with propylene oxide units and subsequently with ethylene oxide units. The alkoxylated polyalkyleneimine is especially preferably an ethoxylated and propoxylated polyethyleneimine comprising from 1 to 100 mol of propylene oxide units and from 1 to 50 mol of ethylene oxide units, in each case per mol of NH units. The alkoxylated polyalkyleneimine is specially preferably an ethoxylated and propoxylated polyethyleneimine comprising 1.5 to 15 mol of propylene oxide and 1 to 50 mol of ethylene oxide, in each case per mol of NH units.

Preferred alkyleneoxy unit corresponding to the formula -(R¹O)ₘ(R²O)ₙR³ where
R¹ is prop-1,2-ylene, but-1,2-ylene or their mixtures (preferably prop-1,2-ylene),
R² is ethylene,
R³ is hydrogen, C₁-C₆ alkyl, C₂-C₆ alkenyl, C₂-C₆ alkynyl, -SO₃R^{a}, -P(O)OR^{b}OR^{c}, -CH₂CO₂R^{d}, or -C(O)R^{e}
R^{a} and R^{d} independently of one another are an H, inorganic or organic cations,
R^{b} and R^{c} independently of one another are an H, inorganic or organic cations, C₁-C₆-alkyl, C₂-C₆-alkenyl or C₂-C₆-alkynyl,
R^{e} is C₁-C₂₂-alkyl, C₂-C₂₂-alkenyl, C₂-C₂₂-alkynyl, C₆-C₂₂-aryl, C₇-C₂₂-alkylaryl.

R³ is preferably an H or C₁-C₆-alkyl, especially preferably an H or methyl, in particular H.

R^{a} and R^{d} independently of one another are H, or are inorganic or organic cations which may carry one or more positive charges. Examples of inorganic cations are cations of ammonium, Na⁺, K⁺, Mg²⁺, Ca²⁺, or Zn²⁺. Examples of organic cations are methylammonium, dimethylammonium, trimethylammonium, tetramethylammonium, (2-hydroxyethyl)ammonium, bis(2-hydroxyethyl)ammonium, tris(2-hydroxyethyl)ammonium, tetra(2-hydroxyethyl)ammonium. Preferably, R^{a} and R^{d} independently of one another are H or inorganic cations. If an inorganic or organic cation is present, then the matching anionic group would be formed on R³ by the corresponding functional group (for example -SO₃-, -P(O)O-O- or -CH₂CO₂-).

R^{b} and R^{c} preferably independently of one another are H, inorganic or organic cations. Suitable inorganic or organic cations are those mentioned under R^{a}.

R^{e} is preferably C₁-C₁₂-alkyl, C₆-C₁₂-aryl or C₇-C₁₂-alkylaryl, especially preferably C₁-C₆-alkyl.

The index m has a preferable value of 0 to 10, preferably up to 6, especially preferably up to 5. The index n has a preferable value of at least 5, preferably at least 15, especially preferably at least 20 to 40, preferably up to 35, especially preferably up to 30. The total of m + n preferably has a value of at least 5, especially preferably at least 15, very especially preferably at least 20 to 40, especially preferably up to 35.

The alkoxylated polyalkyleneimines has preferably a weight average molecular weight (Mw) of 800 to 150.000 g/mol, especially preferably of 5000 to 100.000 g/mol, very specially preferably of 20.000 to 80.000 g/mol, very specially preferably of 30.000 to 60.000 g/mol.

The preparation of the alkoxylated polyalkyleneimine is generally known, for example as described in WO 1999/67352 page 4, line 45 to page 6, line 42.

The alkoxylated polyalkyleneimine is usually soluble in water, for example to at least 5 g/l at 20°C, preferably to at least 20 g/l, in particular at least 50 g/l.

The construction material composition according to the invention comprises preferably from 0.01 to 10% by weight, preferably from 0.025 to 5 % by weight and in particular from 0.05 to 1 % by weight of the alkoxylated polyalkyleneimine.

In one particularly preferred embodiment, the construction material composition according to the invention comprises based on the weight of the dry construction material composition,
A) 1 -99.97 wt.-% of at least one inorganic binder, preferably from 10 to 99 wt.-% and in particular from 20 to 98 wt.-% of at least one inorganic binder,
B) 0.01 - 50 wt.-% of at least one clay, preferably from 0.01 to 10 wt.-% and in particular from 0.05 to 5 wt.-% of at least one clay,
C) 0.01 - 10 wt.-%, of at least one polymeric dispersant, which comprises at least one structural unit comprising anionic groups and/or at least one structural unit comprising anionogenic groups and further at least one structural unit having polyether side chains, preferably from 0.01 to 10 wt.-%, preferably from 0.05 to 5 wt.-% and in particular from 0.1 to 1 wt.-% of the polymeric dispersant,
D) 0.01 - 10 wt.-% of at least one alkoxylated polyalkyleneimine, wherein the alkoxylated polyalkyleneimine has a weight average molecular weight (Mw) of 500 to 200.000 g/mol, preferably from 0.025 to 5 wt.-% and in particular from 0.05 to 1 wt.-% of the alkoxylated polyalkyleneimine.

In another embodiment, the present invention relates to the use of the at least one alkoxylated polyalkyleneimine D) in a construction material composition as defined herein for modifying robustness against clay deviations, preferably without retarding the set time of the construction material composition. In yet another embodiment, the present invention relates to the use of the at least one alkoxylated polyalkyleneimine as defined herein in a construction material composition in a pretreatment of compositions comprising the alkoxylated polyalkyleneimine prior the addition of an inorganic binder. It is to be understood that in such a pretreatment, no polymeric dispersant C) is present.

In one embodiment, the present invention relates to the use of construction material composition as defined herein, in dry mortar mixtures or in a concrete construction application, preferably in production of plate materials, self-leveling under or overlayments, screeds, repair mortars, grouts, plasters and tile adhesives.

The scope and interest of the invention will be better understood based on the following examples which are intended to illustrate certain embodiments of the invention and are nonlimitative.

### Examples

### Example 1

### Mixing procedure:

A mixture of 500 g stucco (containing 1.2 wt.-% sodium bentonite) was interspersed in 217.5 g water. Then the powder had to soak in liquid for 15 seconds. Afterwards the slurry was mixed with the Hobart mixer at level II (285 rpm) for 30 seconds.

### Estimation of initial setting:

Initial setting was determined with the so-called knife-cut method (analogous to DIN EN 13279).

### Estimation of flow:

Flow was determined after a time of 60 seconds. After adding powder components to liquid the stucco had to soak for 15 seconds. Then the slurry was mixed for 30 seconds with a Hobart mixer. After a total time of 45 seconds a cylinder was filled with the stucco slurry up to the top edge and lifted after 60 seconds. At the end the patty diameter was measured with a caliper rule on two perpendicular axes.

Slurries of natural gypsum (source: Gessi Roccastrada, water/gypsum ratio of 0.435) containing 6% (by mass of gypsum) sodium bentonite were prepared and flow was measured at 81 mm (blind value). Addition of 0.1 wt.-% (by mass of gypsum) Melflux 1493 PCE (commercially available polycarboxylate ether from BASF Constructions Additives GmbH and according to component C) of the invention) has only minor effect on flow (117 mm) due to clay contamination of the gypsum slurry. Adding Sokalan HP 20 (commercially available ethoxylated polyethyleneimine from BASF SE with a weight average molecular weight (Mw) of 17.000 g/mol, a polyethyleneimine backbone having a weight average molecular weight of 800 g/mol and an average of 20 ethoxy units per alkoxylation chain and according to component D) of the invention) in addition to 0.1 wt.-% Melflux 1493 PCE improves flow significantly (0.021 wt.-% Sokalan HP 20 by mass of gypsum (flow = 183 mm), 0.042 wt.-% Sokalan HP 20 by mass of gypsum (flow = 197 mm) and 0.063 wt.-% Sokalan HP 20 by mass of gypsum (flow = 206 mm)).

**Table 1**

| Superplasticizer | Dosage Melflux 1493 / gypsum (wt.-%) | Dosage Sokalan HP 20 / gypsum (wt.-%) | Setting time (min) | Flow (mm) |
|---|---|---|---|---|
| Blind value | - | - | 1:55 | 81 |
| Melflux 1493 PCE | 0.1 | - | 2:25 | 117 |
| Melflux 1493 PCE + Sokalan HP 20 | 0.1 | 0.021 | 2:25 | 183 |
| Melflux 1493 PCE + Sokalan HP 20 | 0.1 | 0.042 | 3:15 | 197 |
| Melflux 1493 PCE + Sokalan HP 20 | 0.1 | 0.063 | 3:20 | 206 |

### Example 2

The following mortar formulation was used:

| | |
|---|---|
| 900 g | Portland cement (Milke) |
| 1350 g | Normensand |
| 315 g | Water |
| 0.11 - 0.16 wt.-% | by weight of cement of Melflux 4930 or Melflux 4930 and Sokalan HP 20 in a weight ratio of 70/30 to adjust a flow value of 28 cm |
| 0, 0,25 or 0.5 wt.-% | by weight of cement of Sodium Bentonite |

A mixture of Melflux 4930 (commercially available polycarboxylate ether from BASF Constructions Additives GmbH and according to component C) of the invention)/Sokalan HP 20 in a weight ratio of 70/30 was compared to the behavior of pure Melflux 4930 with and without clay addition. Both the mixture and the pure Melflux 4930 were adjusted to a flow value of 28 cm. At this dosage 0.5 wt.-% and 0.25 wt.-% by weight of cement of sodium bentonite were added and the flow loss was analyzed.

The mortar was prepared on the basis of the method described in DIN EN 196-1. The additive mixture was dissolved in the mixing water and the dry mortar mixture comprising Portland cement and Normensand (DIN EN 196-1 available from Normensand GmbH) was added. Thereafter, mixing was started at low speed (140 rpm). After 60 s mixing speed was increased (285 rpm) and continued for 30 s. Then the mixing was stopped for 90 s and continued afterwards for 60 s at 285 rpm.

Immediately after the mixing process the slump flow of the samples was determined using the Haegermann cone. The testing method was on the basis of SVB-Richtlinie des Deutschen Ausschusses für Stahlbeton (Deutscher Ausschuss für Stahlbetonbau (Ed.): DAfStb - Richtlinie Selbstverdichtender Beton (SVB-Richtlinie) Berlin, 2003). The Haegermann cone (d at the top = 70 mm, d at the bottom = 100 mm, h = 60 mm) was placed in the middle of a dry glass plate having a diameter of 400 mm and filled with the cement mortar. 5 min. after the first contact between cement and water the cone was lifted and the average diameter of the formed cake was determined.

The results are depicted in table 2. Overall, these experiments show an increased robustness as a result of the addition of Sokalan HP20. The amount of the PCE 4930 was in both cases pure and with Sokalan HP 20 very similar (0.108 vs 0.105 % by weight of cement) to reach the flow of 28 cm representing a very neutral behavior of the alkoxylated polyethylenimines with respect to flow influence.

**Table 2**

| Superplasticizer | Dosage SP bwob % | Dosage Clay bwob % | Flow at 5 min / cm |
|---|---|---|---|
| Melflux 4930 | 0,105 | 0 | 27,6 |
| Melflux 4930 | 0,105 | 0,25 | 17,5 |
| Melflux 4930 | 0,105 | 0,5 | 16,6 |
| Melflux4930/Sokalan HP20 (70/30) | 0,108 | 0 | 27,2 |
| Melflux4930/Sokalan HP20 (70/30) | 0,108 | 0,25 | 22 |
| Melflux4930/Sokalan HP20 (70/30) | 0,108 | 0,5 | 19,3 |

| | | | |
|---|---|---|---|
| SP = Superplasticizer bwob % = by weight of binder | | | |

## Claims

1. A construction material composition comprising
A) at least one inorganic binder,
B) at least one clay,
C) at least one polymeric dispersant, which comprises at least one structural unit comprising anionic groups and/or at least one structural unit comprising anionogenic groups and further at least one structural unit having polyether side chains,
D) at least one alkoxylated polyalkyleneimine, wherein the alkoxylated polyalkyleneimine has a weight average molecular weight (Mw) of 500 to 200.000 g/mol measured by Gel Permeation Chromatography.

2. A construction material composition according to claim 1, wherein the alkoxylated polyalkyleneimine D) comprises a polyethyleneimine backbone having a weight average molecular weight between 100 and 10000 g/mol measured by Gel Permeation Chromatography.

3. A construction material composition according to claim 1 or 2, wherein the alkylenoxid segments of the alkoxylated polyalkyleneimine D) are selected from of at least one element of the group of C₂-C₆-alkylene oxide.

4. A construction material composition according to any one of claims 1 to 3, wherein the alkoxylated polyalkyleneimine D) comprises an average of 5 to 100 alkoxy units per alkoxylation chain.

5. A construction material composition according to any one of claims 1 to 4, wherein the inorganic binder A) is selected from calcium sulfate based binders, hydraulic binders, latent hydraulic binders and mixtures thereof.

6. A construction material composition according to any one of claims 1 to 5, wherein the at least one clay B) is selected from the group of kaolinite, illite, chlorite, vermiculite and smectite.

7. A construction material composition according to any one of claims 1 to 6, wherein the polyether side chains of the at least one polymeric dispersant C) are represented by the structural unit (I),
*-U-(C(O))ₖ-X-(AlkO)ₙ-W (I)
where
* indicates the bonding site to the polymer,
U is a chemical bond or an alkylene group having 1 to 8 carbon atoms,
X is oxygen, sulfur or a group NR¹,
k is 0 or 1,
n is an integer whose average value based on the polymer is in the range from 3 to 300,
Alk is C₂-C₄ alkylene, it being possible for Alk to be identical or different within the group (Alk-O)ₙ,
W is a hydrogen, a C₁-C₆ alkyl or an aryl radical or is the group Y-F, where
Y is a linear or branched alkylene group having 2 to 8 carbon atoms and may carry a phenyl ring,
F is a 5- to 10-membered nitrogen heterocycle which is bonded via nitrogen and which as ring members, besides the nitrogen atom and besides carbon atoms, may have 1, 2 or 3 additional heteroatoms, selected from oxygen, nitrogen, and sulfur, it being possible for the nitrogen ring members to have a group R², and for 1 or 2 carbon ring members to be present in the form of a carbonyl group,
R¹ is hydrogen, C₁-C₄ alkyl or benzyl, and
R² is hydrogen, C₁-C₄ alkyl or benzyl.

8. A construction material composition according to any one of claims 1 to 7, wherein the at least one polymeric dispersant C) comprises at least one group from the series consisting of carboxyester, carboxyl, phosphono, sulfino, sulfo, sulfamido, sulfoxy, sulfoalkyloxy, sulfinoalkyloxy, and phosphonooxy group.

9. A construction material composition according to any one of claims 1 to 8, wherein the at least one polymeric dispersant C) represents a polycondensation product comprising (II) a structural unit comprising an aromatic or heteroaromatic and the polyether group, (III) a phosphated structural unit comprising an aromatic or heteroaromatic.

10. A construction material composition according to claim 9, wherein the structural units (II) and (III) are represented by the following general formulae
(II) A-U-(C(O))ₖ-X-(AlkO)ₙ-W
wherein
A is identical or different and is represented by a substituted or unsubstituted, aromatic or heteroaromatic compound having 5 to 10 carbon atoms in the aromatic system, the other radicals possessing the definition stated for structural unit (I); 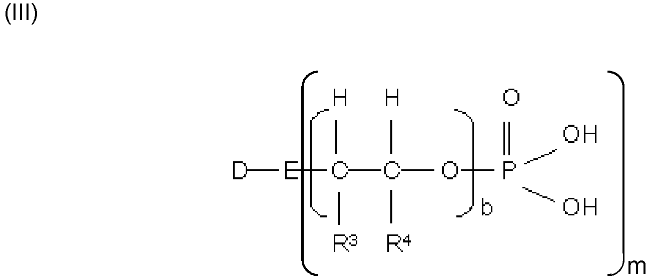 wherein
D is identical or different and is represented by a substituted or unsubstituted, aromatic or heteroaromatic compound having 5 to 10 carbon atoms in the aromatic system
wherein
E is identical or different and is represented by N, NH or O
Where*in
m = 2 if E = N and m = 1 ifE = NH or O
wherein
R³ and R⁴ independently of one another are identical or different and are represented by a branched or unbranched C₁ to C₁₀ alkyl radical, C₅ to C₈ cycloalkyl radical, aryl radical, heteroaryl radical or H
wherein b
is identical or different and is represented by an integer from 0 to 300.

11. A construction material composition according to claims 9 or 10, wherein the polycondensation product comprises a further structural unit (IV) which is represented by the following formula 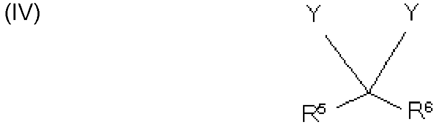 wherein
Y independently of one another is identical or different and is represented by (II), (III) or further constituents of the polycondensation product.

12. A construction material composition according to any one of claims 1 to 8, wherein the at least one polymeric dispersant C) comprises at least one copolymer which is obtainable by polymerizing a mixture of monomers comprising
(V) at least one ethylenically unsaturated monomer which comprises at least one radical from the series consisting of carboxylic acid, carboxylic salt, carboxylic ester, carboxylic amide, carboxylic anhydride, and carboxylic imide
and
(VI) at least one ethylenically unsaturated monomer comprising the structural unit having the polyether side chain.

13. A construction material composition according to claim 12, wherein the ethylenically unsaturated monomer (V) is represented by at least one of the following general formulae from the group of (Va), (Vb), and (Vc) 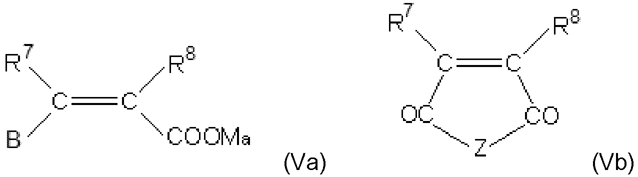 where
R⁷ and R⁸ independently of one another are hydrogen or an aliphatic hydrocarbon radical having 1 to 20 carbon atoms
B is H, -COOMₐ, -CO-O(C_{q}H_{2q}O)ᵣ-R⁹, -CO-NH-(C_{q}H_{2q}O)ᵣ-R⁹
M is hydrogen, a mono-, di- or trivalent metal cation, ammonium ion or an organic amine radical
a is 1/3, 1/2 or 1
R⁹ is hydrogen, an aliphatic hydrocarbon radical having 1 to 20 carbon atoms, a cycloaliphatic hydrocarbon radical having 5 to 8 carbon atoms, an optionally substituted aryl radical having 6 to 14 carbon atoms
q independently of one another for each (C_{q}H_{2q}O) unit is identical or different and is 2, 3 or 4, and
r is 0 to 200
Z is O, NR¹⁶
R¹⁶ independently at each occurrence is identical or different and is represented by a branched or unbranched C₁- to C₁₀-alkyl radical, C₅- to C₈ cycloalkyl radical, aryl radical, heteroaryl radical or H, 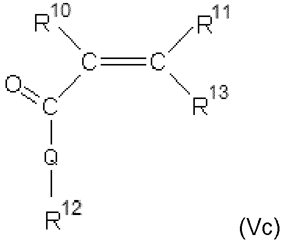
where
R¹⁰ and R¹¹ independently of one another are hydrogen or an aliphatic hydrocarbon radical having 1 to 20 carbon atoms, a cycloaliphatic hydrocarbon radical having 5 to 8 carbon atoms, an optionally substituted aryl radical having 6 to 14 carbon atoms
R¹² is identical or different and is represented by (CₙH₂ₙ)-SO₃H where n = 0, 1, 2, 3 or 4, (CₙH₂ₙ)-OH where n = 0, 1, 2, 3 or 4; (CₙH₂ₙ)-PO₃H₂ where n = 0, 1, 2, 3 or 4, (CₙH₂ₙ)-OPO₃H₂ where n = 0, 1, 2, 3 or 4, (C₆H₄)-SO₃H, (C₆H₄)-PO₃H₂, (C₆H₄)-OPO₃H₂, and (CₙH₂ₙ)-NR¹⁴_{b} where n = 0, 1, 2, 3 or 4 and b = 2 or 3
R¹³ is H, -COOMₐ, -CO-O(C_{q}H_{2q}O)ᵣ-R⁹, -CO-NH-(C_{q}H_{2q}O)ᵣ-R⁹, where Mₐ, R⁹, q, and r possess definitions stated above
R¹⁴ is hydrogen, an aliphatic hydrocarbon radical having 1 to 10 carbon atoms, a cycloaliphatic hydrocarbon radical having 5 to 8 carbon atoms, an optionally substituted aryl radical having 6 to 14 carbon atoms
Q is identical or different and is represented by NH, NR¹⁵ or O; where R¹⁵ is an aliphatic hydrocarbon radical having 1 to 10 carbon atoms, a cycloaliphatic hydrocarbon radical having 5 to 8 carbon atoms, or an optionally substituted aryl radical having 6 to 14 carbon atoms.

14. A construction material composition according to any one of claims 1 to 13, comprising based on the dry weight of the construction material composition,
A) 1 - 99,97 wt.-% of at least one inorganic binder,
B) 0.01 - 50 wt.-% of at least one clay,
C) 0.01 - 10 wt.-%, of at least one polymeric dispersant, which comprises at least one structural unit comprising anionic groups and/or at least one structural unit comprising anionogenic groups and further at least one structural unit having polyether side chains,
D) 0.01 - 10 wt.-% of at least one alkoxylated polyalkyleneimine, wherein the alkoxylated polyalkyleneimine has a weight average molecular weight (Mw) of 500 to 200.000 g/mol measured by Gel Permeation Chromatography.

15. Use of the at least one alkoxylated polyalkyleneimine D) in a construction material composition according to claims 1 to 14 for modifying robustness against clay deviations.
